(19) Europäisches Patentamt / European Patent Office / Office européen des brevets

(11) **EP 1 524 785 B1**

(12) **FASCICULE DE BREVET EUROPEEN**

(45) Date de publication et mention
de la délivrance du brevet:
**01.09.2010   Bulletin 2010/35**

(51) Int Cl.:
***H04B 10/17*** *(2006.01)*

(21) Numéro de dépôt: **04292164.3**

(22) Date de dépôt: **08.09.2004**

(54) **Système de transmission à fibre optique à amplification par effet Raman**

Faseroptisches Übertragungssystem mit Ramanverstärkung

Optical fibre transmission system with Raman amplification

(84) Etats contractants désignés:
**AT BE BG CH CY CZ DE DK EE ES FI FR GB GR
HU IE IT LI LU MC NL PL PT RO SE SI SK TR**

(30) Priorité:   **17.10.2003   FR 0312132**

(43) Date de publication de la demande:
**20.04.2005   Bulletin 2005/16**

(73) Titulaire: **Alcatel Lucent
75008 Paris (FR)**

(72) Inventeurs:
  • **Havard, Vincent
    94600 Choisy Le Roi (FR)**
  • **Boubal, François
    91170 Viry-Chatillon (FR)**

(74) Mandataire: **Chaffraix, Sylvain et al
Alcatel Lucent
Intellectual Property & Standards
54 rue La Boétie
75008 Paris (FR)**

(56) Documents cités:
**US-A- 5 917 969        US-A1- 2003 039 438
US-A1- 2003 072 064     US-B1- 6 456 426**

## Description

La présente invention concerne les systèmes de transmission optique, et plus précisément l'amplification des signaux dans de tels systèmes de transmission.

Un système de transmission à fibre optique comprend typiquement un émetteur injectant des signaux à transmettre dans une fibre optique et un récepteur recevant les signaux après propagation dans la fibre. La propagation dans la fibre conduit à une atténuation du signal; il est possible de prévoir, le long de la fibre des répéteurs faisant subir aux signaux des traitements d'amplification ou de formatage.

Il a été suggéré d'utiliser pour l'amplification des signaux transmis l'effet Raman. Une lumière de pompage est injectée dans la fibre. La puissance de la lumière de pompage est transférée au signal le long de la fibre par effet Raman. La longueur d'onde de la lumière de pompage est choisie de manière à ce que le maximum de gain Raman se situe aux environs de la longueur d'onde du signal à amplifier. L'efficacité du pompage est fonction de la puissance de la lumière de pompage et de la puissance du signal à pomper. Cette solution est par exemple décrit dans « Nonlinear Fiber Optics », Govind P. Agrawal, Ed. 2 - Chap. 8 .

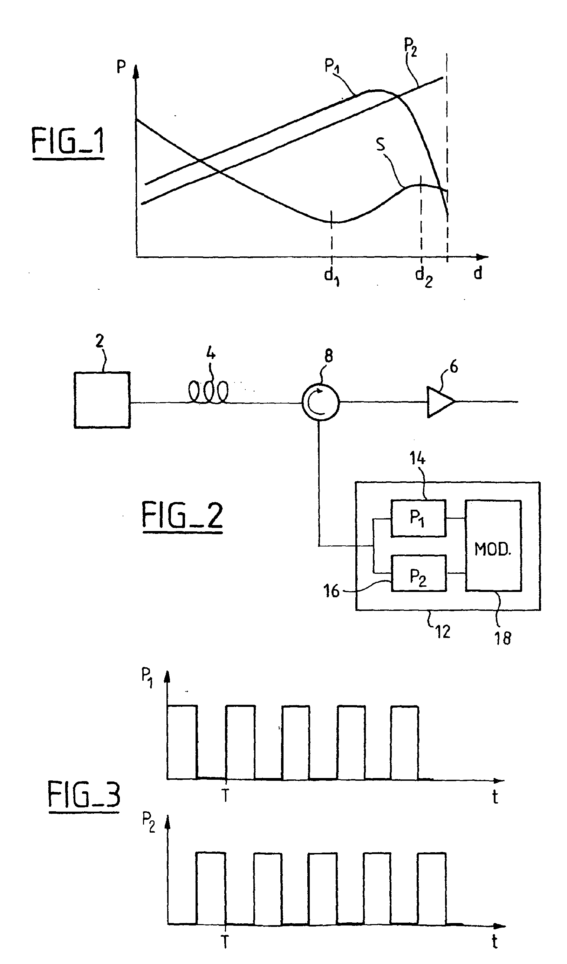

Par ailleurs, « Low noise Raman amplifier employing bidirectional pumping and an optical transmission system incorporating the same », H. D. KIDORF, patent US-6, 181, 464 (Tycom) propose d'injecter simultanément dans le système de transmission une première lumière de pompage ou pompe $P_1$ à une longueur d'onde $\lambda_1$ et une seconde lumière de pompage ou pompe $P_2$ à une seconde longueur d'onde de pompage $\lambda_2$. La longueur d'onde de la première pompe est choisie pour pomper le signal par effet Raman, tandis que la longueur d'onde de la deuxième pompe est choisie pour pomper la première pompe par effet Raman. La figure 1 est un graphe schématique de puissance du signal S et des pompes $P_1$ et $P_2$ dans un tel système, dans le cas de pompes contrapropagatives. Est portée en ordonnées la puissance et en abscisses la distance le long de la fibre optique. Le signal S est injecté à une extrémité de la fibre - l'extrémité gauche sur la figure - tandis que les pompes sont injectées à l'autre extrémité de la fibre - l'extrémité droite sur la figure. La courbe marquée S sur le graphe de la figure 1 est la courbe de puissance du signal; comme le montre la figure, la puissance du signal est maximale à l'injection et décroît sur une première partie de la fibre, jusqu'à une distance $d_1$ du fait de l'atténuation dans la fibre. A la distance $d_1$, la puissance du signal est minimale. Entre les distances $d_1$ et $d_2$, la puissance du signal croît, du fait du pompage du signal par la pompe $P_1$. Au-delà de la distance $d_2$, la puissance du signal décroît de nouveau, la puissance de la pompe $P_1$ n'étant pas suffisante pour que le pompage compense l'atténuation du signal.

A l'autre extrémité de la fibre, la première pompe est injectée à une puissance plus faible que la deuxième pompe. Dans le sens de propagation des pompes - de droite à gauche sur le schéma de la figure 1, la puissance de la deuxième pompe diminue du fait de l'atténuation d'une part et du fait du transfert de puissance vers la première pompe par effet Raman, d'autre part. Toujours dans ce même sens de propagation des pompes, la puissance de la première pompe croît d'abord, les effets de l'atténuation étant compensés par le pompage de la première pompe par la deuxième pompe. La puissance de la première pompe diminue ensuite, du fait du transfert de puissance de la première pompe vers le signal par effet Raman ainsi que du fait de l'atténuation de la fibre.

Ce système présente les inconvénients suivants. La puissance de pompage injectée dans la fibre est limitée par la rétrodiffusion Raleigh et limite l'injection de puissance de la première pompe. Pour une fibre donnée, il n'est pas possible de choisir simplement la zone dans la fibre où le signal subira l'amplification, ou d'adapter cette zone après la définition du système.

Le document US 6456426 décrit un exemple d'un système comprenant des amplificateurs utilisant l'effet Raman.

Il existe donc un besoin d'un système de transmission, dans lequel l'amplification distribuée puisse être adaptée et notamment d'un système qui permette de choisir la zone de la fibre dans laquelle l'amplification distribuée a lieu.

Dans un mode de réalisation, l'invention propose en conséquence un système de transmission optique, comprenant :

- un milieu de transmission présentant une dispersion chromatique;
- des moyens d'émission dans le milieu de transmission d'un signal optique à transmettre;
- des moyens d'émission dans le milieu de transmission d'une première lumière de pompage à une longueur d'onde adaptée au pompage du signal optique par effet Raman;
- des moyens d'émission dans le milieu de transmission d'une deuxième lumière de pompage adaptée à une longueur d'onde adaptée au pompage de la première lumière de pompage par effet Raman;

les moyens d'émission des lumières de pompage étant adaptés à émettre des première et deuxième lumières de pompage modulées en amplitude et présentant une décorrélation temporelle entre les enveloppes des lumières.

Selon une caractéristique, les moyens d'émission des lumières de pompage sont adaptés à émettre des première et deuxième lumières de pompage modulées en amplitude avec la même forme de modulation.

Selon une caractéristique, les moyens d'émission des lumières de pompage sont adaptés à faire varier la décorrélation temporelle entre les enveloppes des première et deuxième lumières de pompage.

Selon une caractéristique, les moyens d'émission des lumières de pompage sont adaptés à émettre des première et deuxième lumières de pompage sans recouvrement des enveloppes des lumières.

Selon une caractéristique, les moyens d'émission du signal optique et les lumières de pompage sont adaptés à émettre dans le milieu de transmission des lumières de pompage contrapropagatives par rapport au signal optique.

L'invention propose également un procédé d'amplification Raman d'un signal optique dans un milieu de propagation dispersif, comprenant l'émission dans le milieu de propagation

-   d'une première lumière de pompage à une longueur d'onde adaptée au pompage du signal optique par effet Raman;
-   d'une deuxième lumière de pompage adaptée à pomper la première lumière de pompage par effet Raman;

les première et deuxième lumières de pompage étant modulées en amplitude, avec une décorrélation temporelle entre les enveloppes des lumières.

Selon une caractéristique, les première et deuxième lumières de pompage sont modulées en amplitude avec la même forme de modulation.

Selon une caractéristique, le procédé comprend une étape de variation de la décorrélation temporelle entre les enveloppes des première et deuxième lumières de pompage au cours de la propagation.

Selon une caractéristique, l'émission s'effectue dans une direction inverse de celle des signaux.

D'autres caractéristiques et avantages de l'invention apparaîtront à la lecture de la description qui suit de modes de réalisation, donnés à titre d'exemple et en référence aux dessins, qui montrent :

-   figure 1, un graphe schématique de la puissance dans un système de transmission selon l'état de la technique;
-   figure 2, une représentation schématique d'un système de transmission dans un mode de réalisation de l'invention;
-   figure 3, des graphes de puissance des pompes au voisinage du point d'injection;
-   figure 4, des graphes de puissance des pompes, en un point du système de transmission;
-   figure 5, un graphe de l'efficacité de l'interaction entre les pompes, en fonction de la distance.
-   figure 6, un graphe schématique de la puissance dans le système de la figure 2.

L'invention propose, dans un système de transmission, utilisant une pluralité de pompes pour une amplification distribuée, de moduler en amplitude les lumières de pompage et de décorréler temporellement les enveloppes des pompes à l'injection dans la fibre. Cette modulation et cette décorrélation limitent le pompage mutuel des pompes à l'injection dans la fibre. Du fait de la dispersion chromatique dans la fibre, la décorrélation initiale des pompes à l'injection n'est pas conservée lors de la propagation des pompes le long de la fibre - les pompes présentant des longueurs d'onde différentes. Il est donc possible, en fonction de la dispersion chromatique de la fibre et des longueurs d'onde des lumières de pompage d'adapter la zone de la fibre dans laquelle l'amplification distribuée est maximale.

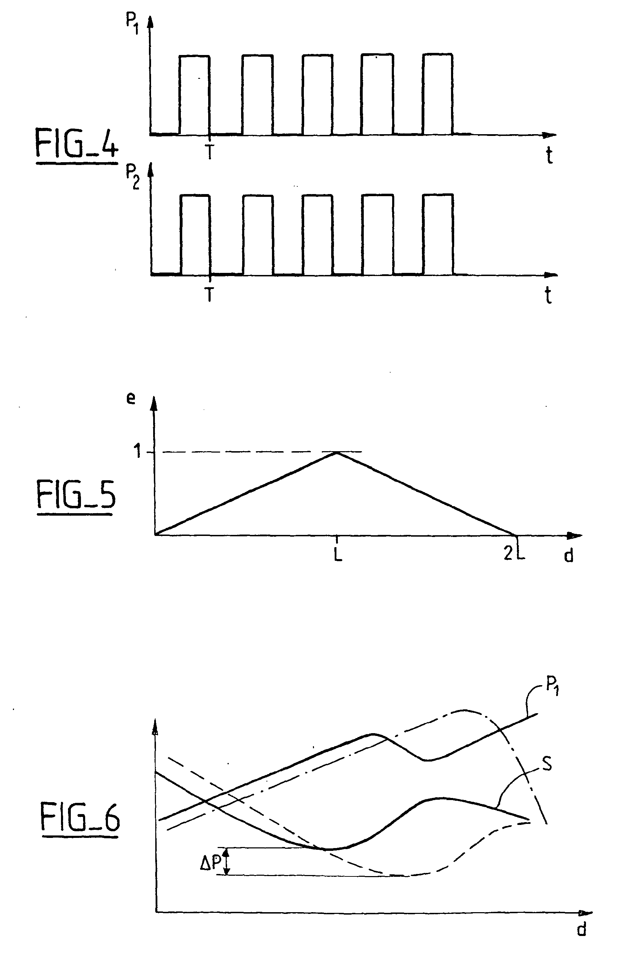

La figure 2 montre une vue schématique d'un système de transmission selon un mode de réalisation de l'invention, dans l'exemple d'un système sans répéteur et d'un pompage contra-propagatif. La figure montre l'émetteur 2 injectant les signaux à transmettre dans la fibre 4, ainsi que, à titre d'exemple, l'amplificateur 6 recevant les signaux après propagation dans la fibre; de façon connue en soi, il peut s'agir de signaux multiplexés en longueur d'onde (WDM en langue anglaise). En amont de l'amplificateur est disposé sur la fibre un circulateur 8, qui n'est qu'un exemple d'un système permettant d'injecter la lumière de pompage dans la fibre. Un tronçon de fibre 10 relie le circulateur 8 à la source de pompage 12. Celle-ci comporte deux sources 14 et 16 fournissant des lumières de pompage à des longueurs d'ondes différentes. Ces sources sont modulées en amplitude par un modulateur 18. Le modulateur est adapté à appliquer aux sources 14 et 16 des modulations d'amplitudes, comme discuté en référence aux figures 3 et 4. Il est avantageux de pouvoir régler sur le modulateur 18 l'un des paramètres suivants : la fréquence du signal de modulation, la forme du signal de modulation, la profondeur de modulation, le décalage entre les signaux de modulation appliqués aux deux lumières. Le réglage de l'un de ces paramètres ou de plusieurs d'entre eux permet d'adapter la source des lumières de pompage au système de transmission, soit à l'installation, soit au cours du fonctionnement pour pallier les variations provoquées par le vieillissement des composants du système de transmission.

Dans l'exemple des figures 3 et 4, les deux pompes sont modulées en amplitude, avec une modulation carrée présentant un taux de modulation de 100% et un rapport de cycle de 50%. Dans l'exemple, les fréquences de modulation sont identiques. La figure 3 montre des graphes schématiques de la puissance en fonction du temps, au voisinage du point d'injection. On a représenté sur la partie supérieure de la figure la puissance de la première pompe, qui est modulée en amplitude. La partie inférieure de la figure montre la puissance de la deuxième pompe. Comme le montre la figure, les deux pompes sont modulées à une même fréquence de modulation mais sont déphasées d'une demi-période. En d'autres termes, les enveloppes des signaux lumineux sont temporellement décorrélés; alternativement, on pourrait aussi dire que les signaux commandant la modulation d'amplitude sont des signaux identiques mais déphasés. Du fait de cette décorrélation, la lumière de la première pompe ne "voie" pas la lumière de la deuxième pompe, ce qui limite l'efficacité du pompage par effet Raman; à strictement parler, en l'absence de tout recouvrement entre les deux pompes, il n'y a pas de pompage d'une pompe par l'autre.

La figure 4 montre des graphes similaires à ceux de la figure 3, après propagation dans la fibre de ligne sur une distance L donnée. La fibre de ligne présente une dispersion chromatique, comme cela est connu en soi. Du fait de cette dispersion chromatique, les vitesses de phase des impulsions de la première pompe et de la deuxième pompe sont différentes. Lorsque l'on se déplace le long du système de translation, on constate que les amplitudes des première et deuxième pompes présentent un déphasage qui varie. La figure 4 montre l'allure de l'amplitude des pompes lorsque la propagation le long de la fibre a été suffisante pour que les signaux des pompes soient "en phase", autrement dit que la corrélation temporelle entre les enveloppes des signaux lumineux soit maximale. La figure montre des amplitudes normalisées et ne tient pas compte de l'atténuation des signaux due à la propagation ou au transfert de puissance entre les pompes par effet Raman.

La figure 5 montre un graphe de l'efficacité e de l'interaction entre les pompes. Cette efficacité est une mesure du recouvrement entre les deux pompes. Elle est nulle dans l'exemple de la figure 3, pour des pompes déphasées de $\pi/2$ - c'est-à-dire pour des pompes modulées avec des commandes de modulation d'amplitude périodiques et identiques mais décalées d'une demi-période. L'efficacité présente une valeur maximale de 1 pour des pompes superposées. Pour permettre un réglage de la zone de l'amplification sur une plage aussi grande que possible, il est avantageux que le recouvrement entre les lumières de pompage puisse varier entre 0 et 1. La valeur de 0 évite tout transfert de puissance à l'émission des pompes. La valeur de 1 maximise le transfert de puissance lorsque les pompes enveloppes des pompes sont en phase.

La valeur de l'efficacité d'interaction représentée sur le graphe peut s'obtenir en calculant le produit des enveloppes des signaux lumineux des première et deuxième pompes. La figure montre que l'efficacité d'interaction, pour la forme de modulation de la figure 1, est nulle à l'origine. Elle vaut 1 pour une distance L vérifiant

$$T/2 = C(\lambda_1 - \lambda_2)L$$

avec

    C la dispersion chromatique de la figure en ps. (nm.km)$^{-1}$;
    T la période du signal de modulation d'amplitude, en ps;
    $\lambda_1$ et $\lambda_2$ les longueurs d'onde des signaux des première et deuxième pompe, en nm;

cette formule indiquant simplement que la différence de dispersion chromatique entre les deux lumières de pompage induit un décalage d'une demi-période de modulation entre deux pompes au bout d'une distance L, en km. Après la distance L, l'efficacité d'interaction décroît linéairement jusqu'à atteindre à nouveau une valeur nulle pour une distance 2.L. Le graphe de la figure 5 est une efficacité du recouvrement et n'est pas représentatif des variations de l'amplitude maximale des pompes, du fait de l'atténuation dans la fibre ou du fait des transferts de puissance entre les pompes et entre les pompes et le signal ou encore du fait de puissances d'injection différentes des pompes dans la fibre.

On comprend de la figure 5 que la zone de la fibre dans laquelle la première pompe est pompée par la deuxième pompe, par rapport à la solution de la figure 1, est décalée en distance: au lieu que le pompage de la deuxième pompe par la première pompe ne s'effectue majoritairement à proximité des sources, il s'effectue après que les pompes ont parcouru un trajet dans la fibre. Le pic de puissance de la première pompe est décalé d'autant, ainsi que la zone de la fibre dans laquelle le signal est pompé. L'exemple de la figure est représentatif du cas simple de signaux déphasés de $\pi/2$, avec une modulation d'amplitude des pompes de forme carrée. On comprend que l'allure de l'efficacité dépend de la décorrélation temporelle initiale des deux pompes; en d'autres termes, en ajustant la décorrélation temporelle des deux pompes à l'injection dans la fibre, on peut décaler le long de la fibre le point de recouvrement maximal des pompes et jouer sur la zone dans laquelle le signal est pompé par la première pompe. On comprend aussi que l'allure de l'efficacité dépend aussi de la forme de la modulation d'amplitude appliquée aux deux pompes; dans l'exemple de la figure 5, la linéarité découle de la forme carrée de la modulation d'amplitude. A titre d'exemple, l'application d'une modulation sinusoïdale aux pompes conduirait à une efficacité d'interaction en sin$^2$ et non plus linéaire; avec une telle forme de modulation, présentant une pente nulle à l'origine, l'interaction entre les pompes augmente plus lentement après l'injection et on repousse encore, par rapport à l'exemple de la figure 5, la zone de la fibre dans laquelle la deuxième pompe est pompée par la première pompe. Il est encore possible, indépendamment de l'ajustement de la décorrélation temporelle entre les deux pompes, de décaler le long de la fibre la zone dans laquelle le pompage s'effectue, en choisissant les formes de modulation d'amplitude des pompes. La modulation proposée comme exemple aux figures 3 et 4 présente un taux de modulation de 100%; on comprend qu'un taux de modulation plus faible a pour conséquence un recouvrement plus important des lumières de pompage, toutes choses égales par ailleurs. On comprend encore que les formes de modulation des pompes, identiques dans les exemples proposés, peuvent encore être différentes.

La zone de la fibre dans laquelle la première pompe est pompée par la deuxième pompe dépend aussi de la dispersion chromatique de la fibre et de la fréquence de la modulation utilisée. Comme le montre l'exemple ci-dessus, la distance à laquelle des pompes décorrélées temporellement se recouvrent est une proportionnelle à la période de la modulation d'amplitude et inversement proportionnelle au produit de la dispersion chromatique par la différence de longueur d'onde entre les pompes. Cette différence de longueur d'onde entre les pompes est contrainte par le saut de Raman-Stockes et est autour de 100 nm. Pour des fibres à gradient d'indice classiquement utilisées dans les systèmes de transmission, la dispersion chromatique dans la plage de longueur d'onde utilisée est typiquement autour de 17 ps.(nm.km)$^{-1}$. On peut donc adapter aussi la distance L en faisant varier la fréquence du signal modulant les pompes en amplitude. On peut typiquement choisir des fréquence du signal de modulation d'amplitude entre 7 et 15 MHz. A titre d'exemple, pour de telles valeurs, la distance L pourrait donc varier entre 20 et 40 km.

La figure 6 montre un graphe schématique des puissances, en échelle logarithmique, dans le système de la figure 2. Comme sur la figure 1, on a porté en ordonnées la puissance et en abscisses la distance le long de la fibre optique. A titre de comparaison, le graphe présente, en traits interrompus, la puissance du signal dans le système de la figure 1. La courbe S montre la puissance du signal dans le système de la figure 2. On remarque que la puissance injectée dans la fibre est plus faible que celle nécessaire dans l'état de la technique, pour assurer une même puissance en sortie; ceci montre que l'invention permet un pompage plus efficace. On pourrait aussi injecter dans la fibre une puissance similaire à celle de l'état de la technique, la solution proposée assurant une propagation sur une distance plus importante.

Le graphe montre encore la courbe $P_1$ de la puissance de la première pompe injectée dans le système de transmission et à titre de comparaison, la puissance de la première pompe injectée dans le système de transmission de la figure 1; les puissances représentées sont des puissances moyennes. Le graphe montre que la première pompe est injectée dans le système de la figure 2 avec une puissance supérieure à celle de la première pompe dans le système de la figure 1. En effet, la limitation qu'impose la rétrodiffusion Rayleigh est une limitation sur la puissance instantanée de la pompe P1, intégrée le long de la fibre. Dans le système de la figure 2, les puissances des première et deuxième pompes sont choisies de sorte à respecter cette limitation.

En partant de la droite de la figure - dans le sens de propagation des pompes - la puissance de la première pompe commence par diminuer, du fait de l'atténuation. Dans cette première zone, la décorrélation temporelle entre les deux pompes est telle que le pompage Raman par la deuxième pompe ne suffit pas à compenser l'atténuation subie par la première pompe. La puissance de la première pompe croît ensuite, lorsque la décorrélation temporelle entre les deux pompes a suffisamment diminué pour que le transfert de puissance de la deuxième pompe à la première pompe par effet Raman, au minimum compense l'atténuation. En continuant dans le sens de propagation des pompes, la puissance de la première pompe diminue à nouveau, du fait du transfert de puissance depuis la première pompe vers les signaux.

La courbe S de la figure 6 montre que le graphe de la puissance des signaux présente une allure similaire au graphe de la figure 1: la puissance commence par diminuer, du fait de l'atténuation, avant d'augmenter du fait du pompage Raman, puis de diminuer à nouveau. Toutefois, par rapport au graphe de la figure 1, la puissance dans le système de la figure 2 diminue moins fortement, les signaux étant pompés plus tôt par la première pompe dans le système de la figure 2. Il en résulte, pour une puissance similaire en sortie, une amélioration du rapport signal sur bruit, représentée par la flèche ΔP sur la figure 6.

La figure 6 montre donc que l'utilisation de pompes comme proposé à la figure 2 permet de diminuer la puissance des signaux injectés dans le système de transmission et d'augmenter le rapport signal sur bruit dans le système de transmission et, par là, d'augmenter la distance de propagation du signal à puissances injectées et reçues équivalentes, en régime de propagation linéaire. En limite de seuil non linéaire, on veillera à conserver une intégrale de puissance signal équivalente.

Bien entendu, l'invention n'est pas limitée aux exemples préférés décrits plus haut. En particulier, si la figure 2 donne l'exemple d'un système présentant deux pompes, on peut aussi prévoir plus de deux pompes. Ceci peut avoir pour avantage d'élargir la bande des signaux pompés. A titre d'exemple, pour les signaux dans une plage de longueurs d'onde de 1550 nm à 1600 nm, on pourrait utiliser deux premières pompes à des longueurs d'ondes voisines de 1450 et 1470 nm pour pomper les signaux. On pourrait alors utiliser une deuxième pompe à une longueur d'onde voisine de 1360 nm pour pomper les deux premières pompes.

L'exemple des figures 2 à 6 montre une modulation carrée avec un déphasage de π/2. Ce choix de forme de modulation et de décalage temporel évite toute interaction entre les signaux de la première pompe et de la deuxième pompe à l'injection. On peut choisir d'autres formes de modulation d'amplitude en fonction de la répartition souhaitée de l'amplification distribuée; on peut utiliser des modulations différentes pour les deux pompes. On peut aussi choisir un déphasage entre les deux pompes différent de la valeur de π/2 proposée à titre d'exemple. Un changement du déphasage, ceteris paribus, a pour effet de décaler par rapport à l'origine le graphe de la figure 5. Un changement de la modulation d'amplitude appliquée aux signaux change l'allure du graphe de la figure 5 qui n'est plus nécessairement linéaire. Une variation de la fréquence du signal de modulation a pour effet de décaler aussi la distance de propagation nécessaire pour remettre en phase des lumières de pompage déphasées au départ.

Dans les exemples, l'invention est appliquée à un système de transmission à fibre optique. Il est manifeste qu'elle s'applique aussi à un système de transmission optique utilisant un milieu de transmission dispersif d'une autre forme. L'exemple de la figure 2 montre un système de transmission avec des lumières de pompage contrapropagatives. On peut aussi appliquer l'invention à des lumières de pompage co-propagatives. Dans l'exemple de la figure 2, on utilise deux sources 14 et 16 modulées par un modulateur 18; d'autres réalisations matérielles sont possibles pour générer les lumières de pompage et les moduler en amplitude. Par exemple, on pourrait utiliser un modulateur unique modulant les lumières de pompage multiplexées et déphaser une lumière par rapport à l'autre par passage dans quelques mètres supplémentaires de fibre standard. Dans l'exemple de la figure 2, on prévoit de pouvoir faire varier les caractéristiques de la modulation. On peut aussi appliquer l'invention avec des lumières de pompage présentant des modulations fixées, sans capacité de réglage du lieu de l'amplification maximale.

## Revendications

**1.** Un système de transmission optique, comprenant

- un milieu de transmission (4) présentant une dispersion chromatique;
- des moyens d'émission (2) dans le milieu de transmission d'un signal optique a transmettre;
- des moyen d'émission (12, 14) dans le milieu de transmission d'une première lumière de pompage à une longueur d'onde adoptée au pompage du signal optique par effet Raman;
- des moyens d'émission (12, 16) dans le milieu de transmission d'au moins une deuxième lumière de pompage à une longueur d'onde différente de la longueur d'onde de la première lumière de pompage et adaptée au pompage de la première lumière de pompage par effet Raman; les moyens d'émission des lumières de pompage étant adaptés à émettre des première et deuxième lumières de pompage modulées en amplitude et présentant une décorrélation temporelle entre les enveloppes des lumières, **caractérisé en ce que** les moyens d'émission des lumières de pompage sont adaptés à faire varier la décorrélation temporelle entre les enveloppes des première et deuxième lumières de pompage pour décaler le long du milieu de transmission (4) le point de recouvrement maximal des première et deuxième lumières de pompage.

**2.** Le système de transmission de la revendication 1, **caractérisé en ce que** les moyens d'émission des lumières de pompage sont adaptés à émettre des première et deuxième lumières de pompage modulées en amplitude avec la même forme de modulation.

**3.** Le système de transmission de la revendication 1, ou 2, **caractérise en ce que** les moyens d'émission des lumières de pompage sont adaptés à émettre des première et deuxième lumières de pompage sans recouvrement des enveloppes des lumières.

**4.** Le système de transmission de l'une des revendications 1 à 3, **caractérisé en ce que** les moyens d'émission du signal optique et les lumières de pompage sont adaptés à émettre dans le milieu de transmission des lumières de pompage contrapropagatives par rapport du signal optique.

**5.** Un procédé d'amplification Raman d'un signal optique dans un milieu de propagation dispersif, comprenant l'émission dans le milieu de propagation

- d'une première lumière de pompage à une longueur d'onde adaptée au pompage du signal optique par effet Raman;
- au moins d'une deuxième lumière de pompage à une longueur d'onde différente de le longueur d'onde de la première lumière de pompage et adaptée à pomper la première lumière de pompage par effet Raman; les première et deuxième lumières de pompage étant modulées en amplitude, avec un décorrélation temporelle entre les enveloppes des lumières; **caractérisé en ce qu'**il comprend une étape de variation de la décorrélation temporelle entre les enveloppes de première et deuxième lumières de pompage pour décaler le long du milieu de transmission (4) le point de recouvrement maximal des première et deuxième lumières de pompage.

**6.** Le procédé de la revendication 5, **caractérisé en ce que** les première et deuxième lumières de pompage sont modulées en amplitude avec la même forme de modulation.

**7.** Le procédé de la revendication 6 ou 7, **caractérisé en ce que** l'émission s'effectue dans une direction inverse de celle des signaux.

## Claims

**1.** Optical transmission system including:

- a transmission medium (4) with chromatic dispersion;
- means for emitting (2), in the transmission medium, an optical signal to be sent;
- means for emitting (12, 14), in the transmission medium, a first pump light at a wavelength adapted for pumping of the optical signal by Raman effect;

- means for emitting (12, 16), in the transmission medium, at least a second pump light at a wavelength different from that of the first pump light and adapted for pumping of the first pump light by Raman effect;

the means for emitting the pump lights being adapted to emit first and second pump lights modulated in amplitude and having a temporal decorrelation between the envelopes of the lights, **characterized in that** the means for emitting the pump lights are adapted to vary the temporal deco-rrelation between the envelopes of the first and second pump lights to shift the point of maximum overlap of the first and second pump lights along the transmission medium (4).

2. The transmission system of claim 1, **characterized in that** the means for emitting the pump lights are adapted to emit amplitude-modulated first and second pump lights with the same modulation form.

3. The transmission system of claim 1 or 2, **characterized in that** the means for emitting the pump lights are adapted to emit first and second pump lights without overlap of the light rangers.

4. The transmission system of one of claims 1 to 3, **characterized in that** the means for emitting the optical signal and the pump lights are adapted to emit, in the transmission medium, pump lights witch are contra-propagative in relation to the optical signal.

5. A Roman amplification method for an optical signal in a dispersive propagation medium, comprising the emission in the propagation medium:

- of a first pump light, at a wavelength adapted for pumping of the optical signal by Raman effect:

- at least a second pump light at a wavelength different than that of the first pump light and adapted to pump the first pump light by Raman effect; the first and second pump lights being amplitude-modulated, with a temporal decorrelation between the envelopes of lights; **characterized in that** it includes a step for variation of the temporal decorrelation between the envelopes of the first and second pump lights to shift the point of maximum overlap of the first and second pump lights along the transmission medium (4).

6. The method of claim 5, **characterized in that** the first and second pump lights are amplitude-modulated with the same form of modulation.

7. The method of claim 6 or 7, **characterized in that** the emission occurs in the opposite direction to that of the signals.

**Patentansprüche**

1. Ein optisches Übertragungssystem, umfassend:

- Ein Übertragungsmedium (4), welches ehe chromatische Dispersion aufweist;
- Mittel zum Aussenden (2), in dem Übertragungsmedium, eines zu übertragenden Signals;
- Mittel zum Aussenden (12, 14), in dem Übertragungsmedium, eines ersten Pumplichts bei einer für das Pumpen des optischen Signals durch Raman-Effekt a ngepassten Wellenlänge;
- Mittel zum Aussenden (12; 16), in dem Übenragungsmedium, mindestens eines zweiten Pumplichts bei einer Wellenlänge, welche sich von der Wellenlänge des ersten Pumplichts unterscheidet und für das Pumpen des ersten Pumplichts durch Raman-Effekt angepasst ist; wobei die Mittel zum Aussenden von Pumplicht dazu ausgelegt sind, das erste und das zweite Pumplicht amplitudenmoduliert und mit einer zeitlichen Dekorrelation zwischen den Lichtumhüllungen auszusenden, **dadurch gekennzeichnet, dass** die Mittel zum Aussenden von Pumplicht dazu ausgelegt sind, zu verursachen, dass die zeitliche Dekorrelation zwischen den Umhüllungen des ersten und des zweiten Pumplichts variiert, um den maximalen Überlappungspunkt des ersten und des zweiten Pumplichts entlang dem Übertragungsmedium (4) zu verschieben.

2. Das Übertragungssystem nach Anspruch 1, **dadurch gekennzeichnet, dass** die Mittel zum Aussenden von Pumplicht dazu ausgelegt sind, das erste und das zweite Pumplicht mit derselben Modulationsform amplitudenmoduliert auszusenden.

3. Das Übertragungssystem nach Anspruch 1 oder 2, **dadurch gekennzeichnet, dass** die Mittel zum Aussenden von Pumplicht dazu ausgelegt sind, das erste und das zweite Pumplicht ohne Überlappung der Lichtumhüllungen auszusenden.

4. Das Übertragungssystem nach einem der Ansprüche 1 bis 3, **dadurch gekennzeichnet, dass** die Mittel zum Aussenden des optischen Signals und des Pumplichts dazu ausgelegt sind, im Übertragungsmedium Pumplicht auszusenden, welches sich in entgegengesetzter Richtung zum optischen Signal ausbreitet.

**5.** Ein Verfahren zur Raman-Verstärkung eines optischen Signals in einem dispersiven Ausbreitungsmedium, umfassend das Aussenden, in dem Ausbreitungsmedium,

- eines ersten Pumplichts bei einer dem Pumpen des optischen Signals durch Raman-Effekt angepassten Wellenlänge;
- mindestens eines zweiten Pumplichts bei einer Wellenlänge, welche sich von der Wellenlänge des ersten Pumplichts unterscheidet und für das Pumpen des ersten Pumplichts durch Raman-E-ffekt angepasst ist; wobei das erste und das zweite Pumplicht amplitudenmoduliert sind und eine zeitliche DeKorrelation zwischen den Lichtumhüllungen aufweisen, **dadurch gekennzeichnet, dass** es einen Schritt des Variierens der zeitlichen Dekorrelation zwischen den Umhüllungen des ersten und des zweiten Pumplichts umfasst, um den maximalen Überlappungspunkt des ersten und des zweiten Pumplichts entlang dem Übetragungsmedium (4) zu verschieben.

**6.** Das Verfahren nach Anspruch 5, **dadurch gekennzeichnet, dass** das erste und das zweite Pumplicht mit derselben Modulationsform ampltiudenmoduliert werden

**7.** Das Verfahren nach Anspruch 6 oder 7, **dadurch gekennzeichnet, dass** das Aussenden in der der Aussendung der Signale entgegengesetzten Richtung erfolgt.

FIG_1

FIG_2

FIG_3

FIG_4

FIG_5

FIG_6

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6181464 B
- US 6456426 B